# FASCICULE DE BREVET EUROPEEN

(11) **EP 0 807 541 B1**
(45) Date de publication et mention de la délivrance du brevet: **02.05.2001**
(21) Numéro de dépôt: 97400541.5
(22) Date de dépôt: 12.03.1997
(51) Int. Cl.: B60D 1/00, B60D 7/00, F16B 5/00

(54) **Ensemble de manutention à chariots et timons**
Eine mit Wagen und Deichsel versehene Vorrichtung zur Handhabung
Handling device having carts and drawbars

(30) Priorité: 15.05.1996 FR 9606110
(43) Date de publication de la demande: 19.11.1997
(73) Titulaire: VALEO EQUIPEMENTS ELECTRIQUES MOTEUR, 94000 Créteil (FR)
(72) Inventeur: Godin, Bruno, 67780 Cucq (FR); Ray, Jacky, 62200 Boulogne sur Mer (FR); Hanquez, Christian, 62650 Zoteux (FR)
(74) Mandataire: Le Forestier, Eric

(56) Documents cités:
- DE-U- 9 414 888
- GB-A- 2 189 198
- NL-A- 8 800 769
- US-A- 3 887 219

## Description

L'invention concerne les chariots de manutention et les timons permettant de les relier entre eux.

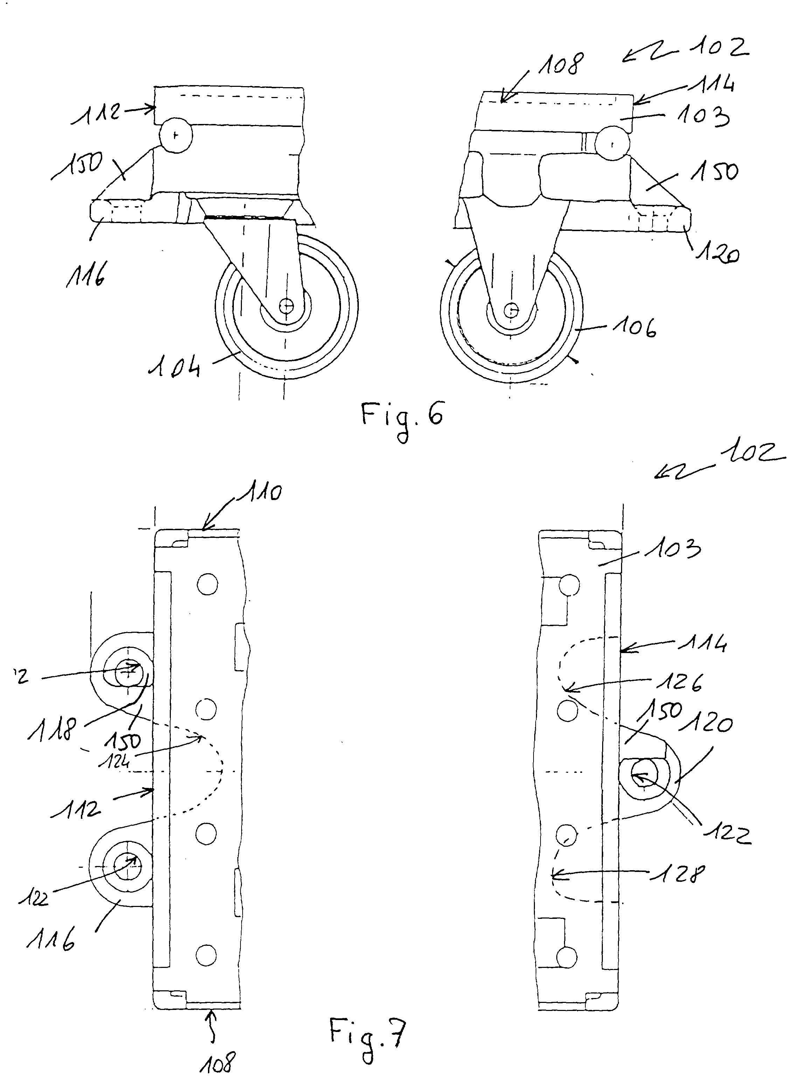

On connaît d'après le document NL-8 800 769 (J.A. BUITENHUIS), dans le mode de réalisation de la figure 7, un ensemble de manutention comportant des chariots rectangulaires et des timons. Les chariots sont adaptés à être groupés deux à deux, les chariots de chaque paire s'étendant côte-à-côte. On dispose ensuite les paires les unes à la suite des autres d'avant en arrière. Chaque timon comporte une paire d'organes de liaison adaptés à être fixés dans des orifices arrière du plateau des chariots d'une paire, et une autre paire d'organes de liaison adaptés à être fixés dans des orifices avant du plateau des chariots de la paire suivante. Le timon est articulé de sorte que les deux paires d'organes de liaison sont mobiles à rotation autour d'un axe vertical. On constitue ainsi un train de chariots successifs, pouvant être utilisé par exemple pour transporter des pièces dans une usine. Le train est environ deux fois moins long que si les chariots étaient disposés par unité à la suite les uns des autres. Le timon permet de relier entre eux les chariots de chaque paire, et de relier les deux paires entre elles.

Dans ce document, le plateau de chaque chariot présente des orifices avant et arrière destinés à recevoir les organes de liaison des timons. Par conséquent, lorsque les chariots ne sont pas reliés par les timons, les chariots peuvent être accolés entre eux en mettant en contact leurs faces avant et arrière pour réaliser un gain de place. Toutefois, ces orifices doivent être laissés libres en permanence pour permettre d'engager et de désengager les timons. La charge transportée par les chariots doit donc être disposée sans recouvrir les orifices, ce qui réduit la surface utile du plateau par rapport à sa surface totale.

Un but de l'invention est de pallier cet inconvénient en proposant un ensemble de manutention tel que les chariots peuvent être accolés par leurs faces avant et arrière comme précité, et tel que toute la surface du plateau peut être utilisée pour charger le chariot sans gêner l'engagement et le désengagement des organes de liaison des timons.

En vue de la réalisation de ce but, on prévoit selon l'invention un ensemble de manutention comprenant au moins quatre chariots comprenant chacun des roues, un élément de liaison avant et un élément de liaison arrière, l'ensemble comprenant au moins un timon comportant des organes de liaison adaptés à être reliés à des éléments de liaison des chariots, le timon étant adapté à être relié simultanément aux éléments de liaison des quatre chariots lorsque les chariots sont groupés latéralement par paires et que les paires sont disposées en se succédant d'avant en arrière, le timon comportant des moyens pour maintenir une distance fixe entre les éléments de liaison des chariots de chaque paire, l'ensemble comportant des moyens pour rendre chaque paire mobile par rapport à l'autre autour d'un axe de rotation vertical unique, dans lequel, sur chaque chariot, l'élément de liaison avant s'étend en saillie d'une face avant du chariot et l'élément de liaison arrière s'étend en saillie d'une face arrière du chariot, la face avant de chaque chariot comportant un évidement conformé pour recevoir l'élément de liaison arrière d'un chariot accolé à cette face avant par sa face arrière, et la face arrière de chaque chariot comportant un évidement conformé pour recevoir l'élément de liaison avant d'un chariot accolé à cette face arrière par sa face avant.

Ainsi, les éléments de liaison laissent totalement dégagée la face supérieure du plateau, de sorte que toute sa surface peut recevoir une charge à transporter. De plus, les évidements peuvent recevoir les éléments de liaison des chariots adjacents pour accoler les chariots par leurs faces avant et arrière en vue de réaliser un gain de place.

Avantageusement, chaque élément de liaison comporte un corps s'étendant parallèlement à un plan général du chariot et présentant un évidement s'étendant suivant une direction perpendiculaire au corps.

Avantageusement, au moins l'un des éléments de liaison de chaque chariot comporte une nervure latérale de renfort perpendiculaire au corps et reliant le corps à la face associée du chariot.

Ainsi, cette nervure assure un renfort de l'élément de liaison à l'encontre des chocs, par exemple des chocs entre chariots, ou entre un chariot et une charge lors du chargement de celle-ci sur le chariot. Cette nervure forme également une butée de guidage pour l'organe de liaison du timon lors de son introduction dans l'orifice. On facilite ainsi la fixation du timon aux chariots.

Avantageusement, le timon comporte un organe de saisie s'étendant à distance d'un plan défini par des extrémités des organes de liaison, cette distance étant supérieure à une distance minimale séparant deux des organes de liaison.

Ainsi, le timon peut être manipulé par son organe de saisie sans que l'opérateur doive se baisser jusqu'au niveau des organes de liaison.

On prévoit également selon l'invention un chariot de manutention comprenant des roues, un élément de liaison avant et un élément de liaison arrière, le chariot étant adapté à faire partie d'un ensemble selon l'invention, l'élément de liaison avant s'étendant en saillie d'une face avant du chariot, et l'élément de liaison arrière s'étendant en saillie d'une face arrière du chariot, la face avant comportant un évidement conformé pour recevoir l'élément de liaison arrière d'un chariot accolé à cette face avant par sa face arrière, et la face arrière comportant un évidement conformé pour recevoir l'élément de liaison avant d'un chariot accolé à cette face arrière par sa face avant.

D'autres caractéristiques et avantages de l'invention apparaîtront encore à la lecture de la description suivante de deux modes de réalisation préférés donnés à titre d'exemples non-limitatifs. Aux dessins annexés:
- la figure 1 est une vue de coté d'un chariot d'un ensemble selon un premier mode de réalisation de l'invention;
- la figure 2 est une vue en plan du chariot de la figure 1;

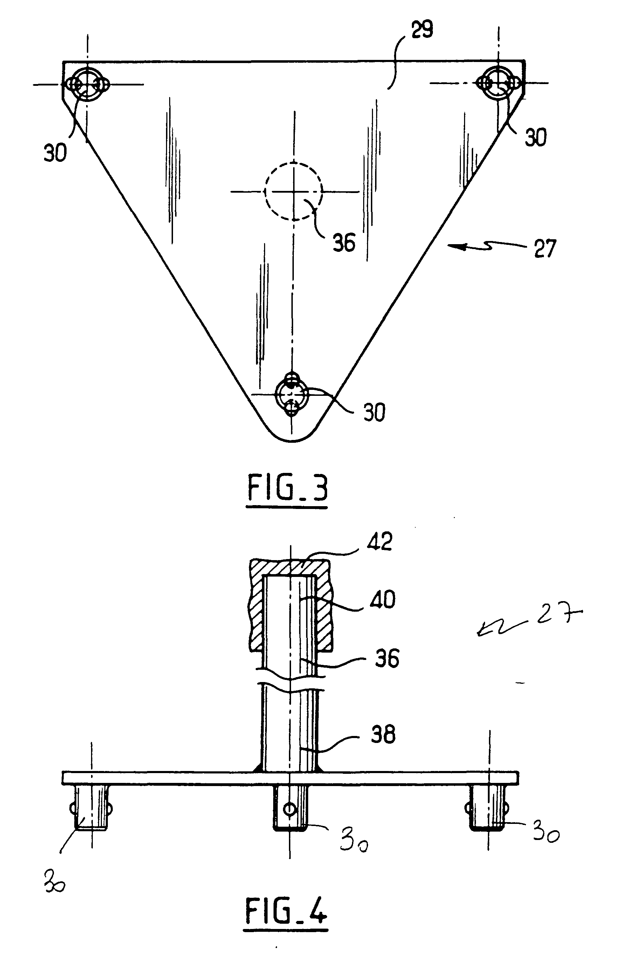

- la figure 3 est une vue de dessous d'un timon du même ensemble selon l'invention;
- la figure 4 est une vue de face du timon de la figure 3;
- la figure 5 est une vue en plan de cet ensemble selon l'invention avec le timon et les chariots assemblés;
- la figure 6 est une vue partielle de côté montrant les extrémités avant et arrière d'un chariot d'un deuxième mode de réalisation de l'ensemble selon l'invention;
- la figure 7 est une vue partielle en plan montrant les extrémités avant et arrière du chariot de la figure 6;
- la figure 8 est une vue de dessous du timon de ce deuxième mode de réalisation;
- la figure 9 est une vue partielle de côté du timon de la figure 8; et
- la figure 10 est une vue partielle en perspective de l'ensemble des figures 6 à 9 montrant les chariots attelés par le timon, le manche du timon étant ôté pour la clarté.

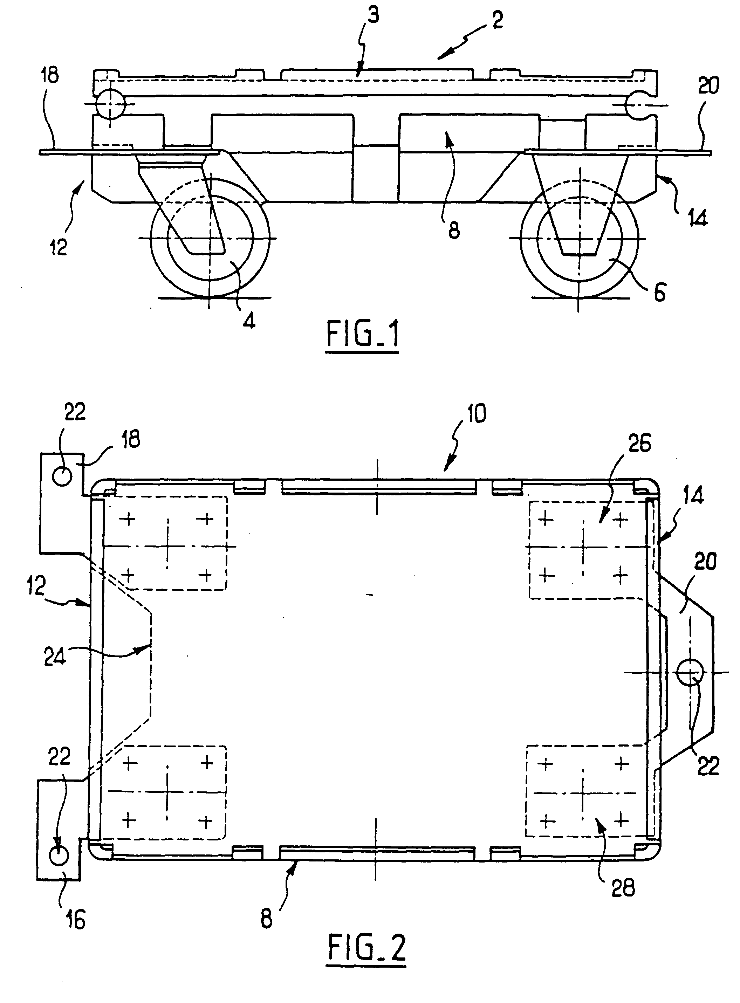

En référence à la figure 1, dans un premier mode de réalisation, l'ensemble selon l'invention comporte au moins quatre chariots 2 comportant un plateau plan rectangulaire 3 comprenant deux roues avant directrices 4 et deux roues arrières fixes 6. Le plateau définit une face latérale gauche 8, une face latérale droite 10, une face d'extrémité avant 12 et une face d'extrémité arrière 14 du chariot.

Chaque chariot comporte trois éléments de liaison comprenant chacun un corps, en l'espèce deux plaquettes avant 16, 18 et une plaquette arrière 20, chaque plaquette étant parallèle au plan général du plateau. La plaquette avant gauche 16 s'étend en saillie de la face d'extrémité avant 12 et de la face latérale gauche 8 et est adjacente à celles-ci. Elle est solidaire de la roue directrice avant gauche 4. La plaquette avant droite 18 s'étend en saillie de la face d'extrémité avant 12 et de la face latérale droite 10 et est adjacente à celle-ci. Elle est solidaire de la roue directrice avant droite 4. La plaquette arrière 20 s'étend en saillie de la face d'extrémité arrière 14, au centre de celle-ci et est adjacente à celles-ci. Elle est solidaire du plateau 3. Chaque plaquette présente un orifice circulaire traversant 22 s'étendant suivant une direction perpendiculaire au plan de la plaquette. La plaquette avant gauche 16 a une extrémité surélevée de sorte que cette extrémité peut être superposée à l'extrémité de la plaquette avant droite 18 d'un chariot 2 dont une face latérale droite 10 est en contact avec la face latérale gauche 8 du chariot, les orifices 22 étant alors concentriques. Ces plaquettes 16, 18 sont ainsi associés l'une avec l'autre pour être reliées par le même organe de liaison du timon comme on le verra. Les plaquettes forment des éléments de liaison avec le timon que l'on décrira plus loin.

La face d'extrémité avant 12 comporte un évidement 24 conformé pour recevoir la plaquette arrière 20 d'un chariot accolé à cette face avant 12 par sa face arrière 14. La face d'extrémité arrière 14 comporte deux évidements 26, 28 conformés pour recevoir les plaquettes avant respectives 16, 18 d'un chariot accolé à cette face arrière 14 par sa face avant 12. Les évidements 24, 26, 28 s'étendent dans l'épaisseur du plateau 3 du chariot, à un niveau inférieur au niveau de la face supérieure utile du plateau. Les plaquettes 16, 18, 20 s'étendent à un niveau identique à celui de ces évidements.

L'ensemble comporte en outre au moins un timon 27 comportant un corps plat triangulaire 29 en forme de triangle isocèle et trois plots rectilignes 30, à savoir un plot arrière et deux plots avant, parallèles entre eux, perpendiculaires au corps 29 et disposés en triangle aux coins du corps sur la face inférieure de celui-ci. Les plots 30 comportent des billes s'étendant partiellement en saillie de la face du plot sous l'action de moyens de rappel et adaptées à rentrer dans le plot lorsqu'elles sont sollicitées à l'encontre des moyens de rappel. Le diamètre des plots 30 correspond à celui des orifices 22. Les plots 30 constituent des organes de liaison adaptés à être introduits dans les orifices 22 et reliés aux plaquettes 16, 18, 20 suivant un accouplement mâle-femelle. Les billes interdisent la libre sortie des plots. Cette introduction s'effectue en déplaçant le timon 27 suivant un mouvement de translation verticale vers le bas par rapport aux chariots 2. Le timon comporte un manche 36 fixé par une première extrémité 38 au centre de la face supérieure du corps 29 et qui constitue un organe de saisie allongé dont une deuxième extrémité 40 s'étend à distance des organes de liaison 30. Un écriteau 42 peut être placé à la deuxième extrémité.

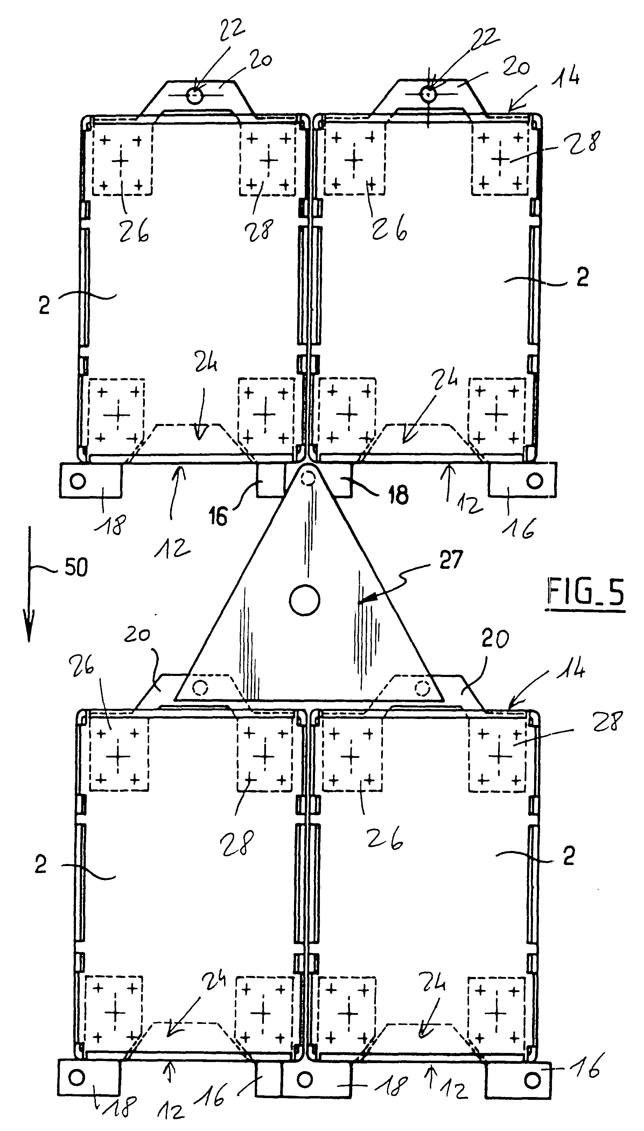

En référence à la figure 5, on groupe les chariots 2 par paire en mettant les faces latérales des chariots appairés en contact et bord à bord. La plaquette avant droite 18 du chariot gauche se superpose avec la plaquette avant gauche 16 du chariot droit et leurs orifices 22 sont concentriques. On dispose les paires de sorte qu'elles se succèdent d'avant en arrière. On introduit le plot arrière 30 du timon 27 dans les orifices avant concentriques 22 de la paire arrière, et les deux plots avant 30 dans les plaquettes arrière 20 des chariots de la paire avant. Ainsi, le timon 27 est relié simultanément aux éléments de liaison 16, 18, 20 des quatre chariots. Le timon 27 maintient une distance fixe entre les éléments de liaison des chariots de chaque paire. Le plot arrière 30 engagé dans les orifice avant 22 de la paire arrière constitue un moyen pour rendre chaque paire mobile par rapport à l'autre autour d'un axe de rotation vertical unique passant par ce plot. Le déplacement s'effectue suivant la flèche 50.

Avec n timons 27 et n + 1 paires de chariots 2, où n est supérieur ou égal à 1, on réalise ainsi un train de chariots qui suit une trace unique et peut être conduit facilement. L'axe de rotation vertical unique est adjacent aux roues directrices avant 4 de la paire de chariots s'étendant à l'arrière du timon 27. Lorsque les chariots ne sont pas reliés par les timons, les paires de chariots peuvent être accolées les unes aux autres par les faces avant et arrière des chariots, les plaquettes rentrant dans les évidements.

En référence aux figures 6 à 10, un deuxième mode de réalisation où les références numériques sont augmentées de 100, présente les mêmes caractéristiques aux quelques variations suivantes près.

Les plaquettes avant 116 et 118 ne s'étendent plus en saillie des faces latérales. Elles s'étendent seulement en saillie de la face avant 112. Elles sont disposées de façon à délimiter sur cette face trois tronçons sensiblement égaux, la distance entre les deux orifices 122 étant sensiblement égale à la distance de chaque orifice 122 à la face latérale 108, 110 la plus proche. Les plaquettes avant sont rigidement fixées au plateau.

L'élément de liaison avant droit 118 comporte une nervure de renfort plane 150 s'étendant dans un plan vertical perpendiculaire au plan de la plaquette 118 et au plan général du chariot. Cette nervure 150 relie la plaquette 118 à la face avant 112 du chariot. La nervure a une forme en équerre, les deux côtés de l'équerre opposés à l'hypoténuse étant accolés respectivement à la plaquette et au plateau. La nervure 150 est décentrée par rapport à l'orifice 122 et s'étend au bord gauche de la plaquette. De même, la plaquette arrière 120 comporte une nervure 150 identique à son bord droit. La nervure assure le renfort mécanique de la plaquette à l'encontre des chocs, et facilite l'introduction du plot 130 du timon 127 dans l'orifice 122, en guidant le plot.

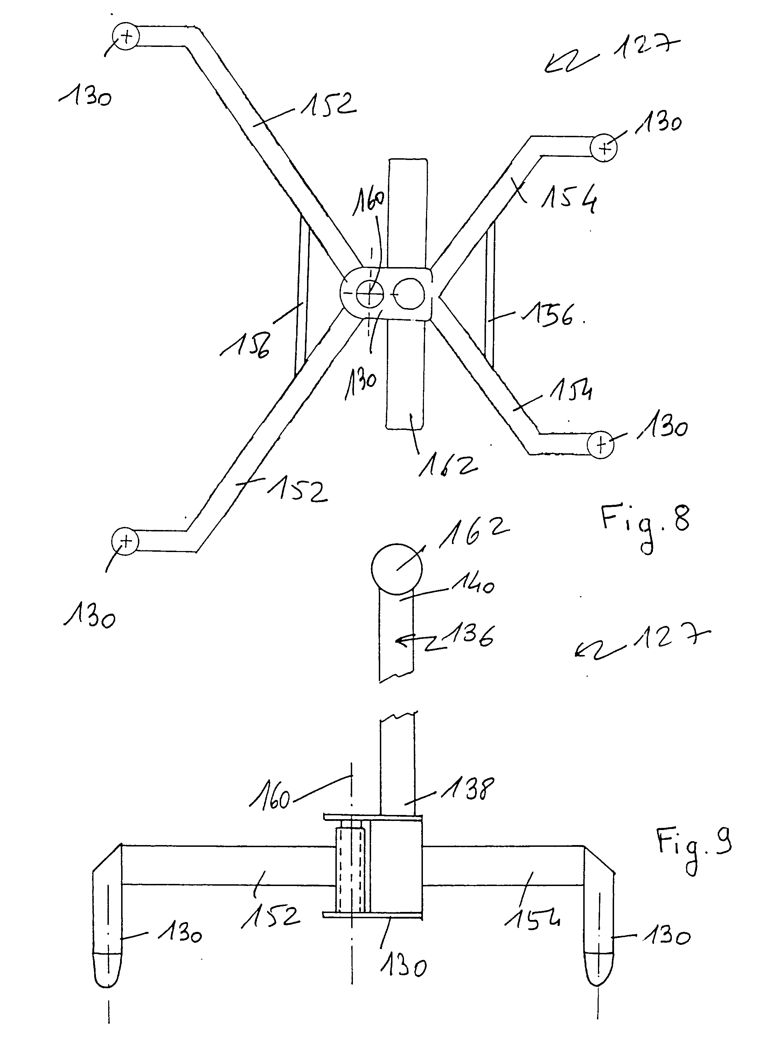

En référence aux figures 8 à 10, le timon 127 comporte cette fois quatre bras, à savoir deux bras avant 152 et deux bras arrière 154. Les bras avant 152 sont fixés rigidement l'un à l'autre par une extrémité et divergent à partir de cette extrémité. En outre, une traverse 156 les relie l'un à l'autre. Il en est de même pour les bras arrière 154. Les quatre bras sont coplanaires. Les bras avant 152 ont mêmes formes et dimensions entre eux. Il en est de même pour les bras arrière 154. Le timon 127 comporte un corps 130 recevant ces extrémités associées des bras en constituant une articulation de sorte que la paire de bras avant 152 est mobile à rotation par rapport à la paire de bras arrière 154 autour d'un axe de rotation 160 perpendiculaire au plan défini par les bras. Chaque bras comporte à son autre extrémité un plot rectiligne 130 identique à ceux du premier mode, chaque plot s'étendant parallèlement à l'axe 160. Les extrémités des plots s'étendent dans un même plan.

Le manche rectiligne 136 du timon s'étend à partir du corps 130 en direction opposée aux plots 130, parallèlement à l'axe 160 et à distance de celui-ci. L'extrémité 140 du manche la plus éloignée du corps s'étend à une distance du plan des extrémités des plots 130 supérieure à une distance minimale entre deux quelconques des plots 130 quelle que soit la position des paires de plots l'une par rapport à l'autre. Cette extrémité 140 comporte une poignée rectiligne 162 perpendiculaire au manche 136.

Avantageusement, la distance séparant l'axe 160 des plots avant 130 est sensiblement identique à celle séparant l'axe 160 des plots arrière 130.

Pour utiliser l'ensemble selon ce deuxième mode de réalisation, on dispose les chariots 102 par paires comme dans le premier mode. Puis on introduit les plots avant 130 dans les plaquettes arrière 120 d'une paire de chariots. De même, pour la paire de chariots qui suit, on introduit l'un des plots arrière dans la plaquette avant droite 118 du chariot de gauche, et on introduit l'autre plot arrière 130 dans la plaquette avant gauche 116 du chariot de droite. Dans cette position, les chariots de chaque paire sont accolés par leurs faces latérales.

La distance séparant l'un de l'autre les deux plots arrière 130 sur le timon 127 est différente de la distance séparant l'un de l'autre les orifices 122 des plaquettes avant gauche et droite d'un même chariot. Ainsi, on constitue un détrompage qui interdit de fixer les deux bras arrière 154 du timon avant aux plaquettes avant d'un unique chariot.

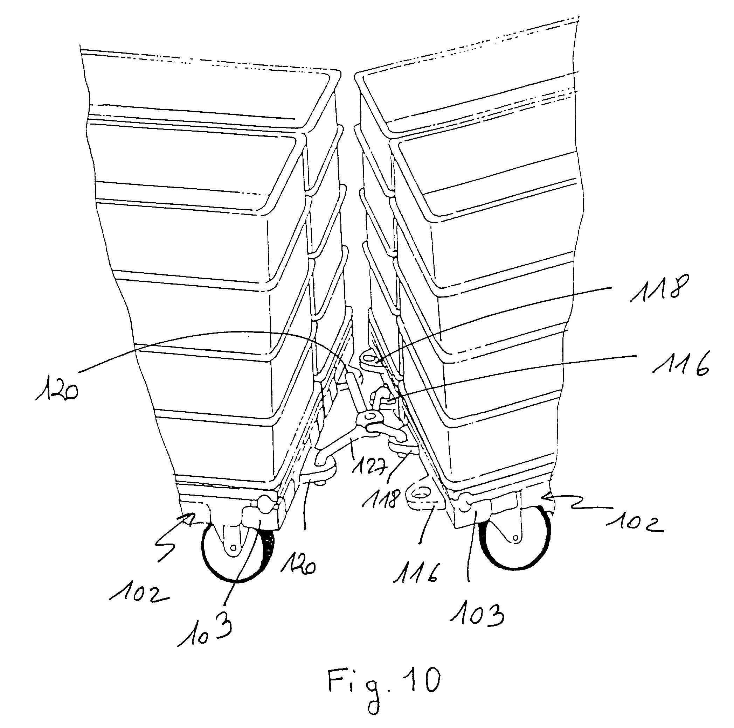

La figure 10 montre l'ensemble de manutention de ce deuxième mode de réalisation durant son utilisation, le manche ayant été ôté pour la clarté. La position de l'axe de rotation 160 facilite le braquage du train de chariots, par exemple pour sa conduite dans des allées étroites d'une usine. Toute la face supérieure des plateaux peut recevoir des charges. Lorsque les timons ne relient pas les chariots, les évidements 124, 126, 128 permettent, comme dans le premier mode, de réunir les éléments de liaison des chariots accolés par leurs faces avant et arrière.

Bien entendu, on pourra apporter à l'invention de nombreuses modifications.

Ainsi, certains des chariots pourront comporter un seul élément de liaison avant adjacent à une face latérale gauche du chariot, et les autres chariots pourront comporter un seul élément de liaison avant adjacent à une face latérale droite du chariot.

L'ensemble pourra être agencé de sorte que dans le train les deux chariots de chaque paire soient séparés par un espace.

## Revendications

1. Ensemble de manutention comprenant au moins quatre chariots (2; 102) comprenant chacun des roues (4, 6; 104, 106), un élément de liaison avant (16, 18; 116, 118) et un élément de liaison arrière (20; 120), l'ensemble comprenant au moins un timon (27; 127) comportant des organes de liaison (30; 130) adaptés à être reliés à des éléments de liaison des chariots, le timon étant adapté à être relié simultanément aux éléments de liaison des quatre chariots lorsque les chariots sont groupés latéralement par paires et que les paires sont disposées en se succédant d'avant en arrière, le timon (27; 127) comportant des moyens pour maintenir une distance fixe entre les éléments de liaison des chariots de chaque paire, l'ensemble comportant des moyens pour rendre chaque paire mobile par rapport à l'autre autour d'un axe de rotation vertical unique, caractérisé en ce que sur chaque chariot, l'élément de liaison avant (16, 18; 116, 118) s'étend en saillie d'une face avant (12; 112) du chariot et l'élément de liaison arrière (20; 120) s'étend en saillie d'une face arrière (14; 114) du chariot, la face avant (12 ; 112) de chaque chariot comportant un évidement (24; 124) conformé pour recevoir l'élément de liaison arrière (20; 120) d'un chariot accolé à cette face avant par sa face arrière (14; 114), et la face arrière de chaque chariot comportant un évidement (26, 28 ; 126, 128) conformé pour recevoir l'élément de liaison avant (16, 18;116, 118) d'un chariot accolé à cette face arrière par sa face avant.

2. Ensemble selon la revendication 1, caractérisé en ce que le timon (127) comporte une paire d'organes de liaison avant (130) et une paire d'organes de liaison arrière (130), le timon présentant une articulation de sorte que la paire avant est mobile à rotation par rapport à la paire arrière autour d'un axe (160) perpendiculaire à un plan général défini par les organes de liaison (130).

3. Ensemble selon la revendication 1, caractérisé en ce que l'élément de liaison (16) de l'un au moins des chariots est adjacent à une face latérale gauche (8) du chariot, et l'élément de liaison (18) de l'un au moins des chariots est adjacent à une face latérale droite (10) du chariot, ces éléments de liaison (16, 18) étant agencés pour être associés l'un à l'autre et être reliés par le même organe de liaison (30) du timon (27) lorsque ces chariots forment l'une des paires.

4. Ensemble selon la revendication 3, caractérisé en ce que chaque chariot comporte deux éléments de liaison avant (16, 18) adjacents aux deux faces latérales gauche (8) et droite (10) du chariot.

5. Ensemble selon la revendication 3 ou 4, caractérisé en ce que le timon (27 ; 127) comporte trois organes de liaison (30) disposés en triangle.

6. Ensemble selon l'une quelconque des revendications 1 à 5, caractérisé en ce que sur chaque chariot, l'une (14, 114) parmi les faces avant et arrière présente un unique élément de liaison (20 ;120) et l'autre (12; 112) parmi les faces avant et arrière présente deux éléments de liaison (16, 18 ; 116, 118).

7. Ensemble selon l'une quelconque des revendications 1 à 6, caractérisé en ce que chaque élément de liaison (16, 18, 20 ; 116, 118, 120) comporte un corps s'étendant parallèlement à un plan général du chariot et présentant un évidement (22; 122) s'étendant suivant une direction perpendiculaire au corps.

8. Ensemble selon la revendication 7, caractérisé en ce qu'au moins l'un des éléments de liaison (118, 120) de chaque chariot comporte une nervure latérale de renfort (150) perpendiculaire au corps et reliant le corps à la face associée du chariot.

9. Ensemble selon la revendications 5, caractérisé en ce que le timon (127) comporte un organe de saisie (136) s'étendant à distance d'un plan défini par des extrémités des organes de liaison (130), cette distance étant supérieure à une distance minimale séparant deux des organes de liaison (130).

10. Ensemble selon l'une quelconque des revendications 5 ou 9, caractérisé en ce que les organes de liaison (30; 130) comprennent des plots comportant des billes s'étendant en saillie de la face du plot sous l'action de moyens de rappel et adaptées à rentrer dans le plot lorsqu'elles sont sollicitées à l'encontre des moyens de rappel.

11. Ensemble selon l'une quelconque des revendications 1 à 10, caractérisé en ce que chaque chariot comporte deux roues avant (4; 104) et deux roues arrière (6 ; 106) disposées en rectangle, chaque roue avant étant directrice.

12. Chariot de manutention (2 ; 102) comprenant des roues (4, 6 ; 104, 106), un élément de liaison avant (16, 18 ; 116, 118) et un élément de liaison arrière (20; 120), caractérisé en ce qu'il est adapté à faire partie d'un ensemble selon l'une des revendications 1 à 11 et en ce que l'élément de liaison avant s'étend en saillie d'une face avant (12; 112) du chariot, et l'élément de liaison arrière (20; 120) s'étend en saillie d'une face arrière (14; 114) du chariot, la face avant (12; 112) comportant un évidement (24; 124) conformé pour recevoir l'élément de liaison arrière d'un chariot accolé à cette face avant par sa face arrière, et la face arrière (14; 114) comportant un évidement (26, 28; 126, 128) conformé pour recevoir l'élément de liaison avant d'un chariot accolé à cette face arrière par sa face avant.

## Patentansprüche

1. Fördervorrichtung mit wenigstens vier Wagen (2; 102), die jeweils Räder (4, 6; 104, 106), ein vorderes Verbindungselement (16, 18; 116, 118) und ein hinteres Verbindungselement (20; 120) enthalten, wobei die Vorrichtung wenigstens eine Deichsel (27; 127) mit Verbindungsorganen (30; 130) umfaßt, die mit Verbindungselementen der Wagen verbunden werden können, wobei die Deichsel gleichzeitig mit den Verbindungselementen der vier Wagen verbunden werden kann, wenn die Wagen seitlich paarweise gruppiert sind und wenn die Paare in einer Aufeinanderfolge von vorn nach hinten angeordnet sind, wobei die Deichsel (27; 127) Mittel umfaßt, um einen festen Abstand zwischen den Verbindungselementen der Wagen jedes Paars beizubehalten, wobei die Vorrichtung Mittel umfaßt, um jedes Paar im Verhältnis zum anderen beweglich um eine einzige vertikale Drehachse zu machen, **dadurch gekennzeichnet**, daß sich an jedem Wagen das vordere Verbindungselement (16, 18; 116, 118) von einer vorderseitigen Fläche (12; 112) des Wagens aus vorstehend erstreckt und sich das hintere Verbindungselement (20; 120) von einer rückseitigen Fläche (14; 114) des Wagens aus vorstehend erstreckt, wobei die vorderseitige Fläche (12; 112) jedes Wagens eine Aussparung (24; 124) enthält, die so gestaltet ist, daß sie das hintere Verbindungselement (20; 120) eines Wagens aufnehmen kann, der durch seine rückseitige Fläche (14; 114) an diese vorderseitige Fläche angehängt ist, und wobei die rückseitige Fläche jedes Wagens eine Aussparung (26, 28; 126, 128) enthält, die so gestaltet ist, daß sie das vordere Verbindungselement (16, 18; 116, 118) eines Wagens aufnehmen kann, der durch seine vorderseitige Fläche an diese rückseitige Fläche angehängt ist.

2. Vorrichtung nach Anspruch 1, **dadurch gekennzeichnet**, daß die Deichsel (127) ein Paar vordere Verbindungsorgane (130) und ein Paar hintere Verbindungsorgane (130) umfaßt, wobei die Deichsel eine Gelenkverbindung aufweist, so daß das vordere Paar im Verhältnis zum hinteren Paar drehbeweglich um eine Achse (160) ist, die senkrecht zu einer durch die Verbindungsorgane (130) definierten allgemeinen Ebene verläuft.

3. Vorrichtung nach Anspruch 1, **dadurch gekennzeichnet**, daß das Verbindungselement (16) wenigstens eines der Wagen einer linken Seitenfläche (8) des Wagens zugekehrt ist und das Verbindungselement (18) wenigstens eines der Wagen einer rechten Seitenfläche (10) des Wagens zugekehrt ist, wobei diese Verbindungselemente (16, 18) so angeordnet sind, daß sie einander zugeordnet und durch das gleiche Verbindungsorgan (30) der Deichsel (27) verbunden werden können, wenn diese Wagen eines der Paare bilden.

4. Vorrichtung nach Anspruch 3, **dadurch gekennzeichnet**, daß jeder Wagen zwei den beiden linken (8) und rechten (10) Seitenflächen des Wagens zugekehrte vordere Verbindungselemente (16, 18) umfaßt.

5. Vorrichtung nach Anspruch 3 oder 4, **dadurch gekennzeichnet**, daß die Deichsel (27; 127) drei als Dreieck angeordnete Verbindungsorgane (30) umfaßt.

6. Vorrichtung nach einem der Ansprüche 1 bis 5, **dadurch gekennzeichnet**, daß an jedem Wagen eine (14, 114) der vorder- und rückseitige Flächen ein einziges Verbindungselement (20; 120) aufweist und die andere (12; 112) der vorder- und rückseitige Flächen zwei Verbindungselemente (16, 18; 116, 118) aufweist.

7. Vorrichtung nach einem der Ansprüche 1 bis 6, **dadurch gekennzeichnet**, daß jedes Verbindungselement (16, 18, 20; 116, 118, 120) einen Körper umfaßt, der sich parallel zu einer allgemeinen Ebene des Wagens erstreckt und eine Aussparung (22; 122) aufweist, die sich entlang einer zum Körper senkrechten Richtung erstreckt.

8. Vorrichtung nach Anspruch 7, **dadurch gekennzeichnet**, daß wenigstens eines der Verbindungselemente (118, 120) jedes Wagens eine seitliche Verstärkungsrippe (150) umfaßt, die senkrecht zum Körper verläuft und den Körper mit der zugehörigen Fläche des Wagens verbindet.

9. Vorrichtung nach Anspruch 5, **dadurch gekennzeichnet**, daß die Deichsel (127) ein Grifforgan (136) umfaßt, das sich in einem Abstand von einer durch Enden der Verbindungsorgane (130) definierten Ebene erstreckt, wobei dieser Abstand größer als ein zwei der Verbindungsorgane (130) trennender Mindestabstand ist.

10. Vorrichtung nach einem der Ansprüche 5 oder 9, **dadurch gekennzeichnet**, daß die Verbindungsorgane (30; 130) Sockel mit Kugeln umfassen, die sich unter der Einwirkung von Rückstellmitteln von der Fläche des Sockels aus vorstehend erstrecken und in den Sockel zurückkehren können, wenn sie entgegen den Rückstellmitteln beaufschlagt werden.

11. Vorrichtung nach einem der Ansprüche 1 bis 10, **dadurch gekennzeichnet**, daß jeder Wagen zwei Vorderräder (4; 104) und zwei Hinterräder (6; 106) umfaßt, die in einem Rechteck angeordnet sind, wobei jedes Vorderrad ein gelenktes Rad ist.

12. Förderwagen (2; 102) mit Rädern (4, 6; 104, 106), einem vorderen Verbindungselement (16, 18; 116, 118) und einem hinteren Verbindungselement (20; 120), **dadurch gekennzeichnet**, daß es Bestandteil einer Vorrichtung nach einem der Ansprüche 1 bis 11 sein kann und daß sich das vordere Verbindungselement von einer vorderseitigen Fläche (12; 112) des Wagens aus vorstehend erstreckt und sich das hintere Verbindungselement (20; 120) von einer rückseitigen Fläche (14; 114) des Wagens aus vorstehend erstreckt, wobei die vorderseitige Fläche (12; 112) eine Aussparung (24; 124) enthält, die so gestaltet ist, daß sie das hintere Verbindungselement eines Wagens aufnehmen kann, der durch seine rückseitige Fläche an diese vorderseitige Fläche angehängt ist, und wobei die rückseitige Fläche (14; 114) eine Aussparung (26, 28; 126, 128) enthält, die so gestaltet ist, daß sie das vordere Verbindungselement eines Wagens aufnehmen kann, der durch seine vorderseitige Fläche an diese rückseitige Fläche angehängt ist.

## Claims

1. Handling equipment comprising at least four trolleys (2; 102), each having wheels (4, 6; 104, 106), a front coupling element (16, 18; 116, 118) and a rear coupling element (20; 120), the equipment including at least one drawbar (27; 127) which comprises coupling members (30; 130) adapted to be connected to coupling elements of the trolleys, the drawbar being adapted to be coupled simultaneously to the coupling elements of the four trolleys when the trolleys are grouped side by side in pairs, with the pairs disposed in a succession from front to rear, the drawbar (27; 127) comprising means for maintaining a fixed distance between the coupling elements of the trolleys in each pair, the equipment including means to render each pair movable with respect to the other about a single vertical axis of rotation, characterised in that, on each trolley, the front coupling element (16, 18; 116, 118) projects from a front face (12; 112) of the trolley and the rear coupling element (20; 120) projects from a rear face (14; 114) of the trolley, the front face (12; 112) of each trolley having an opening (24; 124) which is so configured as to receive the rear coupling element (20; 120) of a trolley attached to the said front face through its rear face (14; 114), and the rear face of each trolley having an opening (26, 28; 126, 128) which is so configured as to receive the front coupling element (16, 18; 116, 118) of a trolley attached to the said rear face through its front face.

2. Equipment according to Claim 1, characterised in that the drawbar (127) includes a pair of front coupling members (130) and a pair of rear coupling members (130), the drawbar having an articulation such that the front pair is rotatable with respect to the rear pair about an axis (160) at right angles to a general plane defined by the coupling members (130).

3. Equipment according to Claim 1, characterised in that the coupling element (16) of at least one of the trolleys is adjacent to a left side face (8) of the trolley, and the coupling element (18) of at least one of the trolleys is adjacent to a right side face (10) of the trolley, the said coupling elements (16, 18) being so arranged as to be associated with each other and connected together by the same coupling member (30) of the drawbar (27) when the said trolleys constitute one of the pairs.

4. Equipment according to Claim 3, characterised in that each trolley includes two front coupling elements (16, 18) adjacent to the two side faces of the trolley, namely its left face (8) and right face (10).

5. Equipment according to Claim 3 or Claim 4, characterised in that the drawbar (27; 127) includes three coupling members (30) in triangular formation.

6. Equipment according to any one of Claims 1 to 5, characterised in that, on each trolley, one (14, 114) of the faces consisting of the front face and rear face has a single coupling element (20; 120), while the other one (12; 112) of the faces consisting of the front and rear faces has two coupling elements (16, 18; 116, 118).

7. Equipment according to any one of Claims 1 to 6, characterised in that each coupling element (16, 18, 20; 116, 118, 120) comprises a body extending parallel to a general plane of the trolley and having an opening (22; 122) which extends in a direction at right angles to the body.

8. Equipment according to Claim 7, characterised in that at least one of the coupling elements (118, 120) of each trolley has a lateral reinforcing rib (150) at right angles to the body and joining the body to the associated face of the trolley.

9. Equipment according to Claim 5, characterised in that the drawbar (127) includes a handle member (136) spaced away from a plane defined by the ends of the coupling members (130), by a distance which is greater than a minimum distance that separates two of the coupling members (130).

10. Equipment according to Claim 5 or Claim 9,
characterised in that the coupling members (30; 130) comprise pads which include balls projecting from the face of the pad under the action of return means and adapted to be retracted into the pad when subjected to a force in opposition to the return means.

11. Equipment according to any one of Claims 1 to 10, characterised in that each trolley has two front wheels (4; 104) and two rear wheels (6; 106) which are disposed in rectangular formation, each front wheel being steerable.

12. A handling trolley (2; 102), including wheels (4, 6; 104, 106), a front coupling element (16, 18; 116, 118) and a rear coupling element (20; 120),
characterised in that it is adapted to form part of equipment according to one of Claims 1 to 11, and in that the front coupling element projects from a front face (12; 112) of the trolley, while the rear coupling element (20; 120) projects from a rear face (14; 114) of the trolley, the front face (12; 112) having an opening (24; 124) which is so configured as to receive the rear coupling element of a trolley coupled to the said front face through its rear face, and the rear face (14; 114) having an opening (26, 28; 126, 128) so configured as to receive the front coupling element of a trolley coupled to the said rear face through its front face.
